# EUROPÄISCHE PATENTSCHRIFT

(11) **EP 1 550 570 B1**
(45) Veröffentlichungstag und Bekanntmachung des Hinweises auf die Patenterteilung: **11.11.2009**
(21) Anmeldenummer: 05007719.7
(22) Anmeldetag: 09.10.2002
(51) Int. Cl.: B60J 1/20

(54) **Geteiltes Fensterrollo für Kraftfahrzeuge**
Divided roller blind for a vehicle window
Store à enrouler divisé pour une fenêtre de véhicule

(30) Priorität: 24.10.2001 DE 10151872
(43) Veröffentlichungstag der Anmeldung: 06.07.2005
(62) Teilanmeldung aus: 02022610.6
(73) Patentinhaber: BOS GmbH & Co. KG, 73760 Ostfildern (DE)
(72) Erfinder: Zimmermann, Gerald, 73113 Ottenbach (DE); Walter, Herbert, 73061 Ebersbach (DE); Sparrer, Henning, 73274 Notzingen (DE)
(74) Vertreter: Rüger, Barthelt & Abel Patentanwälte

(56) Entgegenhaltungen:
- EP-A- 1 129 871
- EP-A- 1 188 591
- FR-A- 2 786 809

## Beschreibung

Die Erfindung betrifft eine Rollovorrichtung für Kraftfahrzeugfenster gemäß dem Oberbegriff des Anspruchs 1. Eine solche Vorrichtung ist aus der EP 1129871 A bekannt.

Aus der DE 10 05 970 ist ferner ein Rollo für Fenster in Türen von Kraftfahrzeugen bekannt. Das dort beschriebene Rollo weist eine unterhalb der Fensterbrüstung drehbar gelagerte Wickelwelle auf, an der mit einer Kante eine Rollobahn befestigt ist. Die Rollobahn ist an ihrer anderen von der Wickelwelle abliegenden Kante an einem Zugstab angebracht und läuft beim Aufspannen durch einen Schlitz in der unteren Fensterbrüstung. Das Aufwickeln der Rollobahn auf die Wickelwelle geschieht mit Hilfe eines Federmotors, während das Abziehen mit Hilfe von zwei linienförmigen Schubgliedern erfolgt, die hinreichend knicksteif sind.

Die Schubglieder werden mit Hilfe eines in der Tür untergebrachten Motors vorgeschoben. Die Schubglieder werden über sogenannte SUFLEXwellen® angetrieben, das heißt biegsame linienförmige Elemente, die an ihrer Außenseite mit einer Schraube versehen sind. Hierdurch ergibt sich eine Art schraubenförmiger Zahnstange, die formschlüssig in ein Ausgangszahnrad eines Getriebemotors eingreift. Beide Schubglieder werden synchron angetrieben.

Bei einer anderen Ausführungsform, die in dieser Druckschrift geoffenbart ist, ist die Auszugsstange ein-oder beidseitig in Führungsschienen geführt, und die Schubglieder laufen knicksteif geführt in der Führungsschiene.

Bei Kraftfahrzeugen ist bekanntermaßen auch das hintere Seitenfenster zu öffnen. Es kann allerdings in der Regel nicht über die gesamte Länge geöffnet werden, weil sonst die versenkte Scheibe mit der dem Radhaus entsprechenden Ausnehmung an der Tür kollidieren würde. Deswegen wird das hintere Seitenfenster der Tür durch einen Steg in einen im Wesentlichen rechteckigen und einen im weitesten Sinne dreieckförmigen Teil aufgeteilt. Die Scheibe im rechteckförmigen Teil lässt sich versenken, während die Scheibe im dreieckförmigen Teil nicht zu öffnen ist.

Bei dem bekannten Rollo deckt die Rollobahn beide Fensterabschnitte ab. Eine solche Abdeckung beider Teile setzt eine bestimmte Fenstergeometrie voraus.

Die bekannte Konstruktion ist für extrem große Seitenfenster von sehr großen hinteren Seitentüren nur bedingt geeignet. Andererseits herrscht in dem Innenraum auch von derartigen Türen, ein notorischer Platzmangel, infolge der Vielzahl von Funktionen, die zwischenzeitlich in den Türen implementiert sind.

Aus der EP 1 129 871 A1 ist eine Rolloanordnung bekannt, die speziell für geteilte Fenster von Türen an Kraftfahrzeugen geeignet ist. Derartige Fenster setzen sich üblicherweise aus einem nahezu rechteckigen und einem angenäherten dreieckförmigen Abschnitt zusammen. Bei der bekannten Rolloanordnung verläuft die eine Wickelwelle unterhalb der Unterkante des rechwinkligen Abschnittes während die andere Wickelwelle rechtwinklig dazu in dem Teiler zwischen den beiden Scheibenabschnitten untergebracht ist.

Auf jeder Wickelwelle, die durch je einen Federmotor angetrieben sind, ist eine Rollobahn aufgewickelt. Die Betätigung der beiden Rollobahnen erfolgt mit Hilfe eines gemeinsamen Antriebs über bowdenzugartige Schubglieder. Die Rollobahn für den rechteckigen Abschnitt wird an der Zugstange über zwei bowdenzugartigen Antriebsglieder angetrieben, die beide, jedes für sich, mit dem Ausgangszahnrad des Antriebsmotor kämmen. Die Verlängerung des einen bowdenzugartigen Antriebsgliedes führt zu einer Art Schlittengetriebe und betätigt dort einen Schlitten. Ein weiterer Schlitten ist getrieblich mit einem weiteren bowdenzugähnlichen Antriebsglied gekuppelt, das über einen Schwenkhebel das Rollo für das dreieckförmige Fenster betätigt. Der unterschiedliche Hub, den die beiden Rollobahnen vollführen, wird durch das Schlittengetriebe ausgeglichen, indem zwischen den Schlitten eine Mitnahmeeinrichtung mit Totgang vorgesehen ist.

Ausgehend hiervon ist es Aufgabe der Erfindung, eine Rollovorrichtung für große geteilte Fenster von Kraftfahrzeugen zu schaffen, ohne den Platzbedarf für den Antrieb nennenswert zu vergrößern.

Diese Aufgabe wird erfindungsgemäß die Rollovorrichtung mit den Merkmalen des Anspruches 1 gelöst.

Bei der neuen Rollovorrichtung sind zwei voneinander getrennte Wickelwellen vorgesehen, die jede für sich an dem Fenster gelagert ist. Mit jeder Wickelwelle ist eine eigene Rollobahn verbunden, wodurch unterschiedliche Wickellängen und/oder Richtungen möglich sind.

Um den Platzbedarf innerhalb der Tür zu vermindern, ist für beide Wickelwellen jeweils eine gemeinsame Antriebseinrichtung vorgesehen, durch die die Rollobahnen entweder im Sinne des Ausfahrens oder des Einfahrens gemeinsam zu betätigen sind. Die jeweils andere, entgegengesetzte Bewegungsrichtung wird von einer für die jeweilige Rollobahn bzw. Wickelwelle spezifischen Antriebseinrichtung bewerkstelligt. Unter gemeinsam soll hier eine im mechanischen Sinne gemeinsame Antriebseinrichtung gemeint sein, bei der mechanische Teile der Antriebseinrichtung für beide Rollobahnen benutzt werden.

Unter der Formulierung, die Rollobahn zu betätigen, sollen hier Lösungen verstanden werden, bei denen die Kraft an dem freien Ende der Rollobahn eingeleitet wird. Dabei ist ein gemeinsamer Getriebemotor vorgesehen, der entsprechende linienförmige Betätigungsglieder in Gang setzt. Diese Betätigungsglieder können Zugseile oder auch linienförmig Schubglieder sein, die von sich hinreichend knicksteif oder knicksteif geführt sind.

Alle linienförmigen Betätigungsglieder, werden durch einen gemeinsamen Elektromotor in Bewegung gebracht.

Wenn die Kraft zum Abwickeln, also um die Wickelwelle im Abwickelsinne in Umdrehungen zu versetzen, an der freien Kante der Rollbahn eingeleitet wird, besteht die Antriebseinrichtung für den entgegensetzten Drehsinn, zweckmäßigerweise jeweils aus einem eigenen Federmotor.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: die erfindungsgemäße Rollovorrichtung in Verbindung mit einer hinteren rechten Seitentür in einer schematisierten perspektivischen Darstellung, in der geöffneten Stellung,
- Fig. 2: Die Rollovorrichtung nach Fig. 1 in der geschlossenen Stellung,
- Fig. 3: die Führung der Zugstange in Verbindung mit dem zugehörigen Schubglied, in einer vergrößerten Ausschnittsdarstellung und
- Fig. 4: die Führung des Schlittens für die dreieckförmige Rollobahn.

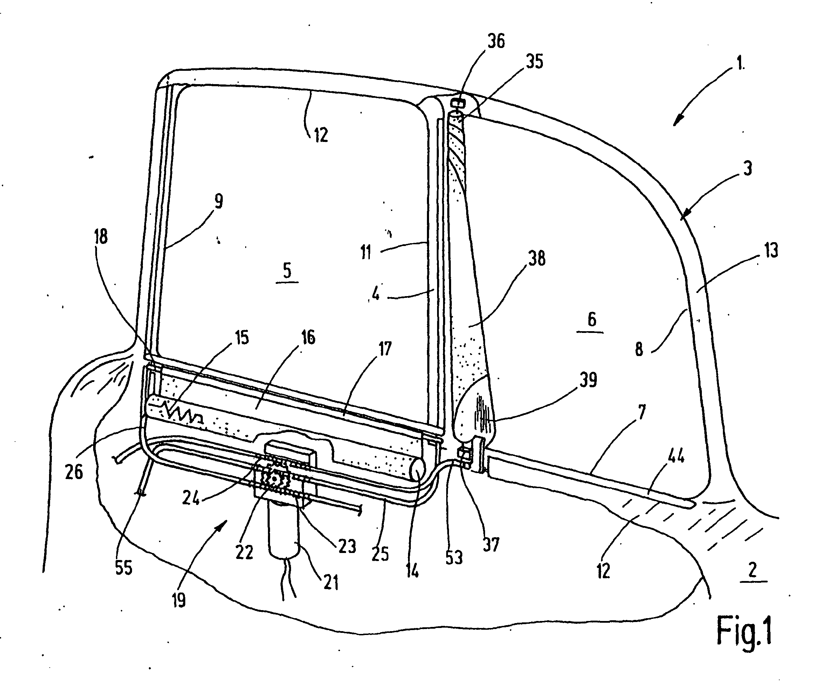

Figur 1 zeigt in einer stark schematisierten Ansicht das neue Doppelrollo in Verbindung mit einer rechten hinteren Seitentür 1 einer Pkw-Limousine. Die Ansicht veranschaulicht die dem Fahrzeuginsassen zugekehrte Innenseite. Die Tür 1 ist im Bereich ihrer Innenverkleidung 2 teilweise aufgebrochen, um das Wesentliche der Erfindung sichtbar werden zu lassen.

Die Tür 1 weist in ihrem oberen Bereich ein von einem Fensterrahmen 3 eingeschlossenes Fenster auf, das durch einen Mittelsteg 4 in einen vorderen Fensterabschnitt 5 und einen hinteren Fensterabschnitt 6 aufgeteilt ist.

Der hintere Fensterabschnitt 6 wird von einer Fensterunterkante 7 einer gebogen verlaufenden Fensterhinterkante 8 und einer geraden Fensterkante begrenzt, die vertikal verläuft und in der Figur durch andere Teile verdeckt ist. Auf diese Weise hat der hintere Fensterabschnitt 6 eine im weitesten Sinne etwa dreieckförmige Gestalt.

Der Abschnitt 5 hingegen ist weitgehend rechteckig und wird vorn und hinten durch jeweils eine Fensterkante 9, eine Fensterkante 11 sowie einer oberen Fensterkante 12 begrenzt, während die untere Fensterkante in der Darstellung verdeckt ist. Sie verläuft in etwa in Verlängerung der Fensterunterkante 7.

Die Türverkleidung 2 bildet im Anschluss an die Fensterunterkante 7 nach innen zu eine Fensterbrüstung 12, die unterhalb der Fensterunterkante 7 und links von dem Fensterabschnitt 5 zu erkennen ist. Außerdem ist der Fensterrahmen 3 mit einer Innenverkleidung 13 abgedeckt, die um das Wesen der Erfindung erkennen zu lassen, an einigen Stellen ebenfalls aufgebrochen ist.

Unterhalb des Fensterabschnittes 5 ist eine Wickelwelle 14 drehbar gelagert. Die Wickelwelle 14 läuft mit ihrer Achse etwa parallel zu der nicht sichtbaren Fensterunterkante des Fensterabschnittes 5. Die Lagereinrichtungen für die Wickelwelle 14 sind für sich bekannt und in Figur 1 aus Gründen der Übersichtlichkeit nicht dargestellt.

Die Wickelwelle 14 wird mit Hilfe einer als Federmotor dienenden Schraubenfeder, die bei 15 angedeutet ist, in eine Drehrichtung vorgespannt. Der Federmotor 15 ist hierzu in bekannter Weise in der rohrförmigen Wickelwelle 14 untergebracht und mit einem Ende an der Wickelwelle 14 angekoppelt. Das andere Ende des Federmotors 15 ist entsprechend an dem benachbarten Lagerbock für die Wickelwelle 14 verankert.

An der Wickelwelle 14 ist mit einer Kante eine Rollobahn 16 befestigt, deren freie von der Wickelwelle 14 abliegende Kante 17 zu einer schlauchförmigen Schlaufe geformt ist. Durch die Schlaufe führt eine Zugstange 18 hindurch, die an beiden Enden, wie gezeigt, über die Rollbahn 16 übersteht.

Die Rollobahn 16 ist in einer Weise zugeschnitten, dass sie im aufgespannten Zustand den Fensterabschnitt 15 vollständig überdeckt.

Die Rollobahn 16 läuft bei Ausfahren durch einen Schlitz hindurch, der sich im weggebrochenen Teil der Türinnenverkleidung 2 befindet.

Um die Rollobahn 16 entgegen der Kraft des Federmotors 15 von der Wickelwelle 14 abzuziehen, ist eine Antriebseinrichtung 19 vorhanden. Zu der Antriebseinrichtung 19 gehört ein Getriebemotor 21, auf dessen Ausgangswelle ein Zahnrad 22 drehfest sitzt. Das Zahnrad 22 kämmt an gegenüberliegenden Seiten mit zwei als flexible Schubglieder dienenden Suflexwellen 23 und 24, die durch entsprechende Führungskanäle tangential an dem Zahnrad 22 vorbeigeführt sind. An das Getriebegehäuse schließen sich nach links und rechts zwei Führungsrohre 25 und 26 an, über die die beiden Schubglieder 23 und 24 knicksteif bis knapp unterhalb der Fensterunterkante des Fensterabschnittes 5 geführt sind.

Jedes Führungsrohr 25, 26 endet etwa knapp neben dem Ende der Zugstange 18.

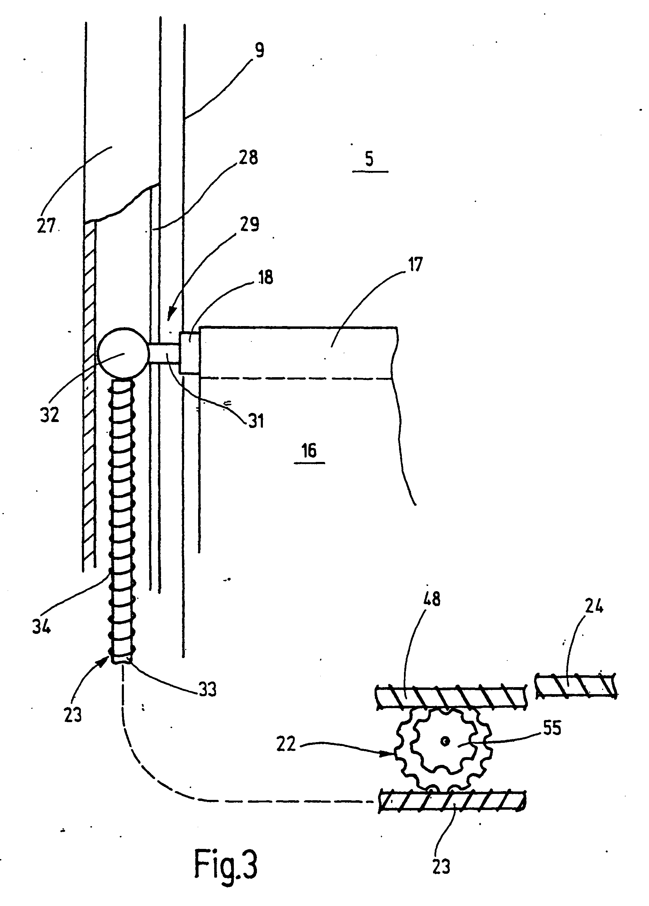

Figur 3 zeigt in einem vergrößerten Maßstab die Führung der Zugstange 18 sowie den Aufbau des Schubglieds 23 sowie deren Zusammenwirken mit der Zugstange 18.

Unterhalb der Fensterbrüstung 12, geht das Führungsrohr 26 in eine seitlich geschlitzte Führungsschiene 27 über. Die Führungsschiene 27 hat die Gestalt eines im wesentlichen zylindrischen Rohres und ist durchgehend auf ihrer dem Fensterabschnitt 5 zugekehrten Seite mit einem durchgehenden Längsschlitz 28 versehen. Die lichte Weite der Führungsschiene 27 entspricht der lichten Weite des Führungssohrs 26.

Die Zugstange 18 ist ebenfalls rohrförmig gestaltet und in ihr steckt ein Führungsglied 29 mit einem Führungszapfen 31. Das freie Ende des Führungszapfens trägt eine im Durchmesser größere Kugel 32, die gleitend in dem Inneren der Führungsschiene 27 aufgenommen ist und durch den Schlitz 28 nicht austreten kann.

Das Schubglied 23 setzt sich aus einer biegsamen Seele 33 und einer darauf aufgebrachten drahtförmigen Wendel 34 zusammen. Die Wendel 34 ist fest mit der Seele 33 verbunden, so dass sich eine Art endloser Schraube ergibt. Die Wendel wirk als Zahn, womit das Schubglied wie eine flexible Zahnstange wirkt, die allseitig eine Schrägverzahnung trägt.

An die Teilung der Wendel 34 ist das Zahnrad 22 angepasst, damit das Schubglied 23 formschlüssig mit der als Zahn wirkenden Wendel 34 mit dem Zahnrad 22 in Eingriff steht.

Die Führungsschiene 27 ist gegenüber der Fensterkante 9 geringfügig zurückversetzt, so dass die gesamte Mechanik hinter der Innenverkleidung 13 verborgen ist und lediglich die Zugstange 18 durch einen Schlitz in der Innenverkleidung 13 in das Türinnere führt.

Das andere Ende der Zugstange 18 ist im Bereich der hinteren Fensterkante 11, also im Bereich des Mittelsteges 4 in der gleichen Weise geführt, wie dies für die Vorderkante in Figur 3 gezeigt ist.

Unterhalb der Verkleidung des Mittelstegs 4 ist eine weitere Wickelwelle 35 zwischen zwei Lagerböcken 36 und 37 drehbar gelagert. An der Wickelwelle 35 ist eine zweite Rollobahn 38 mit einer Kante befestigt. Die Rollobahn 38 ist entsprechend der Kontur des Fensterabschnittes 6 zugeschnitten und dient dazu den Fensterabschnitt 6 bei Bedarf abzudecken. Da der Fensterabschnitt 6 im weitesten Sinne dreieckförmig ist, läuft die Rollobahn 38 an einer spitzen Ecke 39 aus. Von der Rollobahn 38 ist lediglich diese Spitze Ecke 39 geführt und auch angetrieben. Die beiden Wickelwellen 14 und 35 verlaufen etwa im rechten Winkel zueinander.

Das Aufwickeln der zweiten Rollobahn 38 auf die weitere Wickelwelle 35 geschieht mit einem eigenen Federmotor, der ähnlich angeordnet und verankert ist, wie der Federmotor 15.

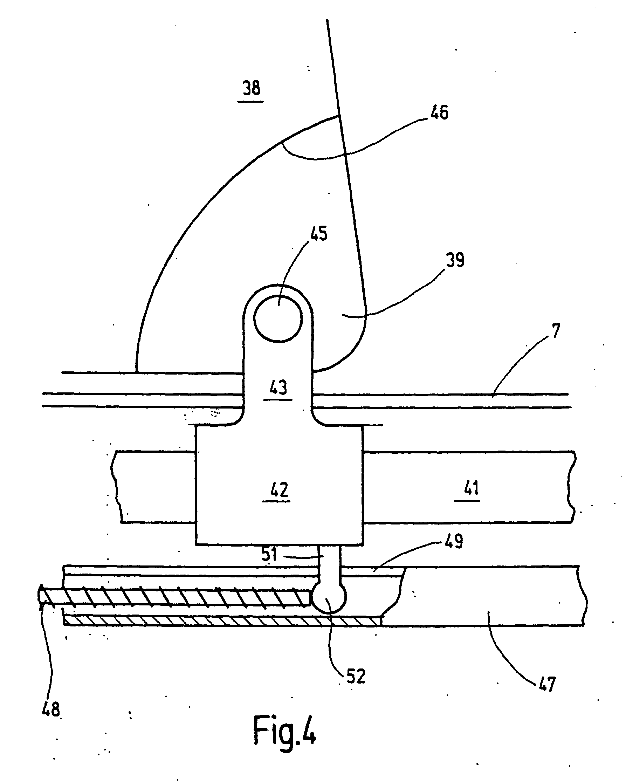

Figur 4 zeigt Teile der Einrichtung, die dazu dient, die zweite Rollobahn 38 aufzuspannen.

Unterhalb der Fensterkante 7 ist innerhalb der Tür eine Führungsschiene 41 befestigt, auf der ein Schlitten 42 klemmfrei gleitend geführt ist. Der Schlitten 42 trägt einen nach oben ragenden Arm 43, der durch einen in der Fensterbrüstung 12 enthaltenen Schlitz 44 aus dem Türinneren hervorsteht. Das freie Ende des Armes 43 ist beispielsweise über einen Niet 45 mit der mit einer Versteifung 46 versehenen Ecke 39 der zweiten Rollobahn 38 verbunden.

Unterhalb und parallel zu der Führungsschiene 41 ist ein Führungsrohr 47 vorhanden, in der eine weiteres Schubglied 48 in Form einer Suflexwelle 48 geführt ist. Das Führungsrohr 47 ist mit einem durchgehenden nach oben offenen Längsschlitz 49 versehen, durch den ein Zapfen 51 hineinragt, der an seinem freien Ende eine Kugel 52 einstückig trägt.

Die Kugel 52 liegt formschlüssig am freien Ende des weiteren Schubglieds 48 an.

Das Führungsrohr 47 geht unterhalb des Lagerbocks 37 in ein ungeschlitztes Führungsrohr 53 über, das zu dem gemeinsamen Antriebsmotor 19 führt.

Wie die vergrößerte Ausschnittsdarstellung in Figur 3 unten erkennen lässt, sitzt auf der Ausgangswelle des Getriebemotors nicht nur das Zahnrad 22, das dem Antrieb der beiden Schubglieder 23 und 24 dient, sondern noch ein weiteres Zahnrad 55, mit dem das weitere Schubglied 48 bewegt wird. Da sämtliche Schubglieder 23, 24, 48 formschlüssig mit dem jeweiligen Zahnrad 22, 55 gekuppelt sind und auch die beiden Zahnräder 22, 55 miteinander drehfest verbunden sind, ist eine formschlüssige schlupffreie Bewegung der Schubglieder 23, 24, 48 gewährleistet. Die Bewegung erfolgt gleichzeitig.

Die Funktionsweise der insoweit beschriebenen Doppelrollovorrichtung sieht wie folgt aus:

Im Ruhezustand sind die Fensterabschnitte 5, 6 frei. Die beiden Rollobahnen 16 und 38 sind auf die jeweilige Wickelwelle 14 und 35 aufgewickelt. Die Schubglieder 23, 24, 48 sind weit genug aus den Führungsschienen 27 und 47 zurückgezogen, damit die Rollobahnen 16, 38 ungehindert die gezeigte Position einnehmen können, in der ihre freien Kanten 17 bzw. 39 der jeweiligen Fensterkante mit der Wickelwelle 14, 35 benachbart sind.

Wenn der Benutzer eine Abschattung der Fensterabschnitte 5, 6 wünscht, wird über einen nicht weiter gezeigten Steuerschalter, der Getriebemotor 21 in Gang gesetzt. Die beiden Zahnräder 22, 55 drehen sich synchron mit der selben Geschwindigkeit. Da die beiden Schubglieder 23 und 24 an einander diametral gegenüberliegenden Seiten mit der Verzahnung des Zahnrades 22 in Eingriff stehen, wird beispielsweise das Schubglied 23 bezogen auf die Darstellung nach links und das Schubglied 24 nach rechts bewegt. In dieselbe Richtung wie das Schubglied 24 bewegt sich auch das weitere Schubglied 48, jedoch mit einer anderen Geschwindigkeit, entsprechend dem Durchmesserunterschied zwischen den beiden Zahnrädern 22 und 55.

Nach einem kurzen Stück Weg kommen die freien Enden der beiden Schubglieder 23 und 24 mit den Führungsgliedern 29 der Zugstange 18 in Eingriff und drücken die Zugstange in Richtung auf die obere Fensterkante 12. Dabei wird die Rollobahn 16 entgegen der Wirkung des Federmotors 15 von der Wickelwelle 14 abgezogen.

Gleichzeitig mit dieser Bewegung der beiden Schubglieder 23, 24 erfolgt auch die Bewegung des weiteren Schubgliedes 48. Das weitere Schubglied 48 kommt mit seinem freien Ende mit der Führungskugel 52 in Eingriff und nimmt diese in Richtung auf die Hinterkante 8 des Fensterabschnittes 6 mit. Die Bewegung wird auf den Schlitten 42 und von dort auf die Ecke 39 der zweiten Rollobahn 38 übertragen. Die zweite Rollobahn 38 wird von der Wickelwelle 35 gegen die Wirkung des dort vorhandenen Federmotors abgezogen.

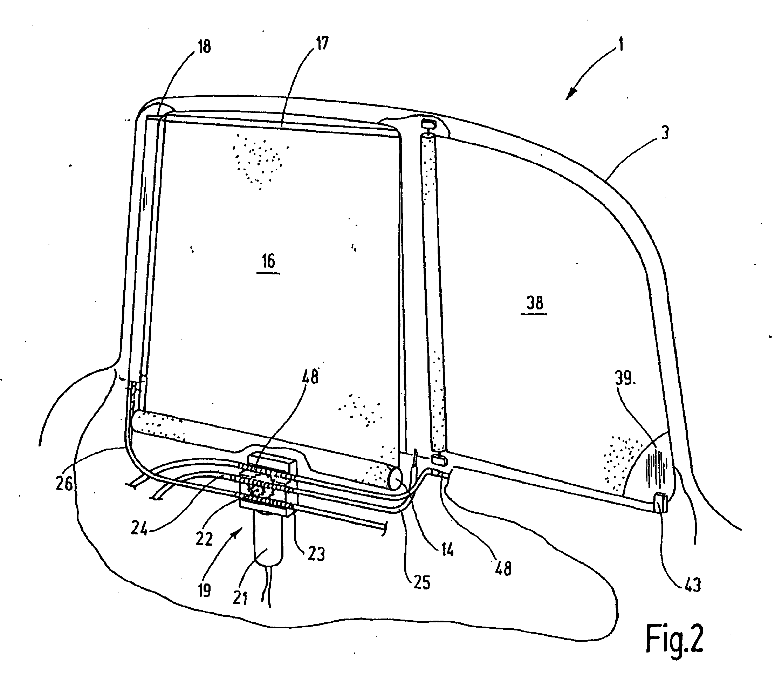

Die Endstellung des Doppelrollos nach Figur 1 ist in Figur 2 gezeigt.

Die Bemessung sämtlicher Teil ist so aufeinander abgestimmt, dass die beiden Rollobahnen 16 und 38 gleichzeitig ihre Endlage erreichen, obwohl beispielsweise der Weg den die freie Kante der Rollbahn 38 zurücklegen muss, deutlich kürzer ist, als der Hub, den die freie Kante 17 der Rollobahn 16 durchläuft. Der Unterschied im Bewegungsweg wird erreicht indem beispielsweise, das jenige Schubglied, das die Rollobahn mit dem kürzesten Hub bewegt, einen entsprechend größeren Leerweg durchlaufen muss, bevor es mit der betreffenden Führungskugel 22 oder 52 in Eingriff kommt, wenn sich die betroffene Rollobahn in der aufgewickelten Stellung befindet.

Zum Einfahren wird der Getriebemotor 21 mit dem umgekehrten Drehsinn eingeschaltet. Die Schubglieder 23, 24, 48 werden wiederum gleichzeitig aus dem betreffenden Führungsrohr 27 bzw. 47 zurückgezogen.

Da die Rollbahnen 16 und 38 ständig unter der Spannung des Federmotors in der betreffenden Wickelwelle 14, 35 stehen, bleiben die Rollobahnen 16, 38 straff gespannt und werden in dem Maße auf die Wickelwellen 14, 35 aufgewickelt, wie dies das Zurückweichen der Schubglieder 23, 24, 48 gestattet.

Angenommen die Rollobahn 38 legt einen deutlich kürzeren Weg zurück, so erreicht sie, wenn sämtliche Schubglieder, 23, 24, 48 mit der selben Lineargeschwindigkeit laufen, schneller als die Rollbahn 16 ihre eingefahrene Lage. Das Schubglied 48, das nur lose an der Führungskugel 52 anliegt, wird ab dieser Stellung von dieser Führungskugel 52 abkuppeln und sich entsprechend weit in das zugehörige Führungsrohr zurückziehen, solange bis der Antriebsmotor 21 stillgesetzt wird, weil auch die Rollobahn 16 ihre Endlage erreicht hat.

Zweckmäßigerweise wird man jedoch dafür sorgen, dass beide Rollobahnen 16, 38 ungefähr dieselbe Zeit benötigen, um ihren jeweiligen Hub zu durchlaufen. Dies kann, durch Wahl der Übersetzungsverhältnisse der beiden Zahnräder 22 und 55 erreicht werden. Ein eventuell verbleibender Restfehler, der optisch nicht störend ist, wird durch einen entsprechenden Leerweg des Schubglieds 23, 24, 48 bei dem "schnelleren Rollo" ausgeglichen. Der Leerweg ist möglich, weil die Schubglieder 23, 24, 48 lediglich in einer Bewegungsrichtung formschlüssig mit der Zugstange 18 bzw. dem Schlitten 42 zusammenwirken. Die Wirkverbindung ist nicht auf Zug belastbar. Die Schubglieder können beim Rücklauf beliebig abkuppeln und demgemäß einen beliebigen Leerweg zurücklegen, ehe sie beim Ausschieben mit der Zugstange 18 oder dem Schlitten 42 in Eingriff kommen.

Damit sich die nicht benötigten Enden der Schubglieder nicht verheddern oder verschmutzen, sind auf der den jeweiligen Führungsrohren 25, 26, 53 gegenüberliegenden Seite des Getriebemotors 21 Speicherrohre vorgesehen, wie dies für das Speicherrohr 55 beispielhaft gezeigt ist, das das Schubglied 24 aufnimmt.

Da im gezeigten Ausführungsbeispiel das Zahnrad 22 einen etwas größeren Durchmesser aufweist als das Zahnrad 55, wird das Schubglied 24 zumindest zum Teil von dem Schubglied 48 abgedeckt. Das Schubglied 24 ist deshalb nur in einem kurzen Abschnitt rechts von dem gezeigten Abschnitt des Schubglieds 48 veranschaulicht. Die vollständige Darstellung beider Schubglieder 24 und 48 würde die Darstellung unübersichtlich machen.

Wie sich aus den obigen Darlegungen ergibt, wird bei dem gezeigten Doppelrollo, lediglich ein Elektroantrieb verwendet, um beide Rollobahnen zu bewegen, die sich in unterschiedliche Richtungen bewegen. Die Verwendung eines einzigen Elektromotors ist bei Fahrzeugen dieser Preisklasse weniger eine Kostenfragen, als vielmehr eine Frage des Platzbedarfs innerhalb der Tür. Der Getriebemotor nimmt Raum in Anspruch und kollidiert mehr oder weniger stark mit den in der Tür vorhanden Streben, der Fensterbetätigung, der Türverriegelung, Luftauslassdüsen und -kanälen, eventuelle Rückhaltevorrichtungen und Verletzungsschutzeinrichtungen, wie Airbagsystemen und dergleichen. Die Verminderung der Anzahl von platzraubenden Antrieben ist deswegen höchst vorteilhaft.

Ein Doppelrollo für ein geteiltes Fenster eines Kraftfahrzeugs sieht zwei getrennte Wickelwellen vor, die unter beliebigen Winkeln zueinander an dem Fenster gelagert sind. Mit Hilfe eines gemeinsamen Antriebsmotors werden die Rollobahnen, die der jeweiligen Wickelwelle zugeordnet sind, zumindest in einer Richtung zwangsläufig bewegt. Hierzu ist der Elektromotor mit den freien Kanten der Rollobahnen gekuppelt.

## Patentansprüche

1. Rollovorrichtung für Kraftfahrzeugfenster
mit einer ersten neben einer Fensterkante drehbar gelagerten Wickelwelle (14,35), an der mit einer Kante eine erste Rollobahn (16,38) befestigt ist, die eine von der ersten Wickelwelle (14,35) wegbewegbare freie Kante (17,39) aufweist,
mit wenigstens einer zweiten Wickelwelle (14,35), die neben einer anderen Fensterkante drehbar gelagert ist und an der mit einer Kante eine zugehörige zweite Rollobahn (16,38) befestigt ist, die eine von der wenigstens einen zweiten Wickelwelle (14,35) wegbewegbare freie Kante (17,39) aufweist, und
mit einer Antriebseinrichtung (19,61), die mit allen Rollobahnen (16,38) mechanisch in Wirkverbindung steht und durch die die Rollobahnen (16,38) zumindest mittelbar in einer Richtung gemeinsam zu bewegen sind, **dadurch gekennzeichnet, dass** die gemeinsame Antriebseinrichtung (19) mit der freien Kante (17,39) der jeweiligen Rollobahn (16,38) in entkuppelbarer Wirkverbindung steht, um die Rollobahn (16,38) auszufahren, derart, dass sie insbesondere beim Einfahren der Rollobahn (16,38) von dieser abkuppelt, um einen größeren Hub vollführen zu können, als die betreffende Kante der jeweiligen Rollobahn (16,38).

2. Rollovorrichtung nach Anspruch 1, **dadurch gekennzeichnet, dass** durch die gemeinsame Antriebseinrichtung (19) die Rollobahnen (16,38) im Sinne eines Abwickelns von der Wickelwelle (14,35) zu bewegen sind.

3. Rollovorrichtung nach Anspruch 1, **dadurch gekennzeichnet, dass** die gemeinsame Antriebseinrichtung (19) mit der freien Kante (17,39) der jeweiligen Rollobahn (16,38) in Wirkverbindung steht, um die Rollobahn (16,38) auszufahren.

4. Rollovorrichtung nach den Anspruch 1, **dadurch gekennzeichnet, dass** jeder Wickelwelle (14,35) ein Federmotor (15) zugeordnet ist, um die Wickelwelle (14,35) im Aufwickelsinne der zugehörigen Rollobahn (16,38) vorzuspannen oder in Umdrehungen zu versetzen.

5. Rollovorrichtung nach den Anspruch 1, **dadurch gekennzeichnet, dass** für die erste Rollobahn (16,38) wenigstens ein flexibles linienförmiges Betätigungsglied (24,23,48,66), das an der freien Kante (17,39) der ersten Rollobahn (16,38) angreift, sowie wenigstens ein weiteres flexibles linienförmiges Betätigungsglied (24,23,48,66) aufweist, das an der freien Kante (17,39) der wenigstens einen zweiten Rollobahn (16,38) angreift.

6. Rollovorrichtung nach Anspruch 5, **dadurch gekennzeichnet, dass** die Antriebseinrichtung (19) wenigstens eines der Betätigungsglieder (24,23,48,66) von einer der Rollobahnen (16,38) unmittelbar bewegt.

7. Rollovorrichtung nach Anspruch 5, **dadurch gekennzeichnet, dass** die Antriebseinrichtung (19) wenigstens eines der Betätigungslieder (24,23,48,66) jeder Rollobahn (16,38) unmittelbar bewegt und dass die Betätigungsglieder (24,23,48,66) von dem gemeinsamen Antriebsmotor (19) schlupffrei angetrieben sind.

8. Rollovorrichtung nach Anspruch 5, **dadurch gekennzeichnet, dass** das Betätigungsglied (24,23,48) für wenigstens eine der Rollobahnen (16,38) von einem knicksteifen oder knicksteif geführten Schubglied gebildet ist, das mit seinem freien Enden an der freien Kante (17,39) der wenigstens einen Rollobahn (16,38) angreift.

9. Rollovorrichtung nach Anspruch 5, **dadurch gekennzeichnet, dass** das Betätigungsglied (24,23,48) lediglich bezüglich einer Bewegungsrichtung formschlüssig mit der freien Kante der jeweiligen Rollobahn (16,38) zusammenwirkt.

10. Rollovorrichtung nach Anspruch 5, **dadurch gekennzeichnet, dass** die Betätigungsglieder (24,23,48) für beide Rollobahnen (16,38) knicksteife oder knicksteif geführte Schubglieder sind.

11. Rollovorrichtung nach den Anspruch 1, **dadurch gekennzeichnet, dass** die beiden Wickelwellen (14,35) nicht parallel zueinander verlaufen.

12. Rollovorrichtung nach den Anspruch 1, **dadurch gekennzeichnet, dass** die beiden Wickelwellen (14,35) etwa in einem Winkel von 90° zueinander angeordnet sind.

13. Rollovorrichtung nach Anspruch 1, **dadurch gekennzeichnet, dass** sie für ein durch einen Steg (4) geteiltes Fenster vorgesehen ist, derart, dass die eine Wickelwelle (14,35) neben einer Kante des einen Fensterteils (5,6) und die andere Wickelwelle (14,35) neben einer Kante des anderen Fensterteils (5,6) angeordnet ist.

## Claims

1. Roller blind arrangement for motor vehicle windows,
with a first winding shaft (14, 35) rotatably disposed next to a window edge and having a first blind sheet (16, 38) fastened to it at one end, said blind sheet having a free edge (17, 39), which can be moved away from the first winding shaft (14, 35), with at least a second winding shaft (14, 35), which is rotatably disposed next to another window edge and to which an associated second blind sheet (16, 38) is fastened at one edge, said second blind sheet having a free edge (17, 39), which can be moved away from a second winding shaft (14, 35), and
with a drive means (19, 61), which is mechanically actively connected to all blind sheets (16, 38) and by means of which the blind sheets (16, 38) are to be jointly moved at least directly in one direction, **characterised in that** the common drive means (19) is detachably actively connected to the free edge (17, 39) of the respective blind sheet (16, 38) in order to extend the blind sheet (16, 38) such that it detaches from this in particular during retraction of the blind sheet (16, 38), so that it can perform a larger stroke than the respective edge of the respective blind sheet (16, 38).

2. Roller blind arrangement according to claim 1, **characterised in that** the blind sheets (16, 38) are to be moved by the common drive means (19) in the sense of unwinding of the winding shaft (14, 35).

3. Roller blind arrangement according to claim 1, **characterised in that** the common drive means (19) is actively connected to the free edge (17, 39) of the respective blind sheet (16, 38) in order to extend the blind sheet (16, 38).

4. Roller blind arrangement according to claim 1, **characterised in that** a spring motor (15) is associated with each winding shaft (14, 35) to bias the winding shaft (14, 35) in the sense of winding up the associated blind sheet (16, 38) or to set this in rotation.

5. Roller blind arrangement according to claim 1, **characterised in that** for? the first blind sheet (16, 38) has at least one flexible linear operating member (24, 23, 48, 66), which acts on the free edge (17, 39) of the first blind sheet (16, 38), and at least one further flexible linear operating member (24, 23, 48, 66), which acts on the free edge (17, 39) of the at least one second blind sheet (16, 38).

6. Roller blind arrangement according to claim 5, **characterised in that** the drive means (19) directly moves at least one of the operating members (24, 23, 48, 66) of one of the blind sheets (16, 38).

7. Roller blind arrangement according to claim 5, **characterised in that** the drive means (19) directly moves at least one of the operating members (24, 23, 48, 66) of each blind sheet (16, 38), and that the operating members (24, 23, 48, 66) are driven slip-free by the common drive motor (19).

8. Roller blind arrangement according to claim 5, **characterised in that** the operating member (24, 23, 48) for at least one of the blind sheets (16, 38) is formed by a buckle-resistant pushing member or a pushing member guided in a buckle-resistant manner, which acts on the free edge (17, 39) of the at least one blind sheet (1'6, 38) with its free ends.

9. Roller blind arrangement according to claim 5**, characterised in that** the operating member (24, 23, 48) cooperates positively with the free edge of the respective blind sheet (16, 38) only with respect to one direction of movement.

10. Roller blind arrangement according to claim 5, **characterised in that** the operating members (24, 23, 48) for both blind sheets (16, 38) are formed by buckle-resistant pushing members or pushing members guided in a buckle-resistant manner.

11. Roller blind arrangement according to claim 1, **characterised in that** the two winding shafts (14, 35) do not run parallel to one another.

12. Roller blind arrangement according to claim 1, **characterised in that** the two winding shafts (14, 35) are arranged approximately at an angle of 90° to one another.

13. Roller blind arrangement according to claim 1, **characterised in that** it is provided for a window divided by a bar (4) such that one winding shaft (14, 35) is arranged next to an edge of one window part (5, 6) and the other winding shaft (14, 35) is arranged next to an edge of the other window part (5, 6).

## Revendications

1. Dispositif de store à enrouleur destiné à des fenêtres de véhicules automobiles,
comprenant un premier arbre d'enroulement (14, 35) qui est monté avec possibilité de rotation à proximité d'un bord de fenêtre et auquel est fixé un bord d'une première bande de store (16, 38) qui présente un bord libre (17, 39) pouvant être éloigné du premier arbre d'enroulement (14, 35),
comprenant au moins un deuxième arbre d'enroulement (14, 35) qui est monté avec possibilité de rotation à proximité d'un autre bord de fenêtre et auquel est fixé un bord d'une deuxième bande de store (16, 38) associée qui présente un bord libre (17, 39) pouvant être éloigné du deuxième arbre d'enroulement (14, 35), au nombre d'au moins un, et
comprenant un moyen d'entraînement (19, 61) qui est en liaison mécanique active avec toutes les bandes de store (16, 38) et qui permet de déplacer les bandes de store (16, 38) ensemble dans un sens, au moins de façon indirecte, **caractérisé par le fait que**
le moyen d'entraînement (19) commun est en liaison active découplable avec le bord libre (17, 39) de la bande de store (16, 38) respective, afin de dérouler la bande de store (16, 38) de manière telle que, notamment lors de l'enroulement de la bande de store (16, 38), il se découple de celle-ci pour pouvoir effectuer une course plus importante que le bord concerné de la bande de store (16, 38) respective).

2. Dispositif de store selon la revendication 1, **caractérisé par le fait que** le moyen d'entraînement (19) commun permet de déplacer les bandes de store (16, 38) dans le sens d'un déroulement de l'arbre d'enroulement (14, 35).

3. Dispositif de store selon la revendication 1, **caractérisé par le fait que** le moyen d'entraînement (19) commun est en liaison active avec le bord (17, 39) libre de la bande de store (16, 38) respective, aux fins de déployer la bande de store (16, 38).

4. Dispositif de store selon la revendication 1, **caractérisé par le fait qu'**est associé à chaque arbre d'enroulement (14, 35), un moteur à ressort (15) qui est destiné à mettre sous précontrainte ou à mettre en rotation l'arbre d'enroulement (14, 35), dans le sens de l'enroulement de la bande de store (16, 38) associée.

5. Dispositif de store selon la revendication 1, **caractérisé par le fait qu'**il est prévu, pour la première bande de store (16, 38), au moins un organe d'actionnement (24, 23, 48, 66) souple linéaire, qui agit sur le bord libre (17, 39) de la première bande de store (16, 38), ainsi qu'au moins un autre organe d'actionnement (24, 23, 48, 66) souple linéaire, qui agit sur le bord libre (17, 39) de la deuxième bande de store (16, 38), au nombre d'au moins une.

6. Dispositif de store selon la revendication 5, **caractérisé par le fait que** le moyen d'entraînement (19) déplace de façon directe au moins l'un des organes d'actionnement (24, 23, 48, 66) de l'une des bandes de store (16, 38).

7. Dispositif de store selon la revendication 5, **caractérisé par le fait que** le moyen d'entraînement (19) déplace directement au moins un des organes d'actionnement (24, 23, 48, 66) de chaque bande de store (16, 38), et **par le fait que** les organes d'actionnement (24, 23, 48, 66) sont entraînés sans glissement par le moteur d'entraînement (19) commun.

8. Dispositif de store selon la revendication 5, **caractérisé par le fait que** l'organe d'actionnement (24, 23, 48) pour au moins une des bandes de store (16, 38) est constitué d'un élément de poussée résistant au flambage ou guidé de manière à résister au flambage, dont l'extrémité libre agit sur le bord libre (17, 39) de la bande de store (16, 38), au nombre d'au moins une.

9. Dispositif de store selon la revendication 5, **caractérisé par le fait que** l'organe d'actionnement (24, 23, 48) coopère par complémentarité de formes avec le bord libre de la bande de store (16, 38) respective, uniquement par rapport à un sens de déplacement.

10. Dispositif de store selon la revendication 5, **caractérisé par le fait que** les organes d'actionnement (24, 23, 48) pour les deux bandes de store (16, 38) sont des éléments de poussée résistant au flambage ou guidés de manière à résister au flambage.

11. Dispositif de store selon la revendication 1, **caractérisé par le fait que** les deux arbres d'enroulement (14, 35) ne sont pas parallèles l'un à l'autre.

12. Dispositif de store selon la revendication 1, **caractérisé par le fait que** les deux arbres d'enroulement (14, 35) sont disposés l'un par rapport à l'autre de manière à former un angle d'environ 90°.

13. Dispositif de store selon la revendication 1, **caractérisé par le fait qu'**il est prévu pour une fenêtre divisée par une baguette (4), de manière à ce que l'un des arbres d'enroulement (14, 35) se situe à proximité d'un bord d'une partie de fenêtre (5, 6) et l'autre arbre d'enroulement (14, 35) se situe à proximité d'un bord de l'autre partie de fenêtre (5, 6).
